# EUROPÄISCHE PATENTANMELDUNG

(11) **EP 2 565 481 A1**
(43) Veröffentlichungstag der Anmeldung: **06.03.2013**
(21) Anmeldenummer: 11179171.1
(22) Anmeldetag: 29.08.2011
(51) Int. Cl.: F16D 3/79

(54) **Lamellenkupplung**

(71) Anmelder: SIEMENS AKTIENGESELLSCHAFT, 80333 München (DE)
(72) Erfinder: Valtwies, Ewald, 48691 Vreden (DE)

(57) **Zusammenfassung**

Die Erfindung betrifft eine Lamellenkupplung (1) mit einem einer Antriebswelle zugeordneten Flansch (4, 6) und einem einer Abtriebswelle zugeordneten Flansch (4, 6), wobei die Flansche über ein Lamellenpaket (7) miteinander verbunden sind, das eine zentrale Öffnung (9) aufweist und zwischen den Flanschen (4, 6) positioniert und wechselseitig an diesen lösbar befestigt ist, wobei beidseitig des Lamellenpaketes (7) Sicherungselemente (10, 11) vorgesehen sind, die jeweils zwischen einem Flansch (4, 6) und dem Lamellenpaket (7) positioniert und an dem Flansch (4, 6) fixiert sind, wobei die Sicherungselemente (10, 11) in den Bereich der zentralen Öffnung (9) des Lamellenpaketes (7) ragen und miteinander unter Bildung einer die zentrale Öffnung (9) durchgreifenden Sicherungseinrichtung (12) in Eingriff kommen.

## Beschreibung

Die vorliegende Erfindung betrifft eine Lamellenkupplung mit einem einer Antriebswelle zugeordneten Flansch und einem einer Abtriebswelle zugeordneten Flansch, wobei die Flansche über ein Lamellenpaket miteinander verbunden sind, das eine zentrale Öffnung aufweist und zwischen den Flanschen positioniert und wechselseitig an diesen lösbar befestigt ist.

Lamellenkupplungen sind allgemein bekannt und werden beispielsweise als drehstarre Ganzstahlkupplungen zum Verbinden von Maschinenwellen und zum Ausgleich von Wellenversätzen eingesetzt. Eine solche Lamellenkupplung besteht vereinfacht aus einem einer Antriebswelle zugeordneten Kupplungsflansch und einem einer Abtriebswelle zugeordneten Kupplungsflansch, wobei die Kupplungsflansche über ein Lamellenpaket miteinander verbunden sind. Das Lamellenpaket ist zwischen den Kupplungsflanschen positioniert und wechselseitig mit diesen verschraubt. Es besteht aus dünnen, ringförmigen Lamellen, die aus einem flexiblen Material, in der Regel aus einem Federstahl, hergestellt sind. Aufgrund der flexiblen Lamellen sind Lamellenkupplungen mit einem Lamellenpaket geeignet, einen Winkel- und Axialversatz zwischen den angeschlossenen Wellen auszugleichen.

Wenn zusätzlich auch ein radialer Wellenversatz zu kompensieren ist, werden sogenannte Doppellamellenkupplungen mit zwei Lamellenpaketen eingesetzt. Bei diesen ist zwischen den Kupplungsflanschen eine Zwischenhülse mit endseitigen Verbindungsflanschen vorgesehen, wobei jeweils zwischen den Kupplungsflanschen und den Verbindungsflanschen der Zwischenhülse ein Lamellenpaket wechselseitig mit dem Kupplungsflansch und der Zwischenhülse verschraubt ist.

Bei bestimmungsgemäßem Betrieb innerhalb der vorgegebenen Lastspezifikationen und innerhalb zulässiger Wellenverlagerungen sind die Lamellenpakete verschleißfrei. Wird die Kupplung jedoch außerhalb der vorgegebenen Parameter betrieben, kann es zu Brüchen einzelner Lamellen bzw. bei dauerhaftem Betrieb außerhalb der Spezifikationen zu einem Bruch eines ganzen Lamellenpakets kommen. Bei den Doppellamellenkupplungen führt dies dazu, dass die Zwischenhülse auf der Bruchseite einseitig gelöst und unkontrolliert herumgeschleudert wird, was zu Beschädigungen an der Lamellenkupplung und sich anschließender Anlagen und zu Gefährdungen umstehender Personen führen kann. Um solch ein unkontrolliertes Lösen zu verhindern, werden Sicherungsringe eingesetzt, die an der von der Lamellenkupplung wegweisenden Außenseite der Kupplungsflansche angeschraubt werden. Diese ragen über das Lamellenpaket und den Verbindungsflansch der Zwischenhülse hinaus und verhindern ein radiales Ausbrechen der Zwischenhülse. Eine weitere Möglichkeit zur Sicherung der Zwischenhülse besteht darin, einen Mitnehmerring an der Innenseite des Lamellenpaketes vorzusehen, der in den Verbindungsflansch der Zwischenhülse eingreift. Weiterhin können auch verstärkte und verlängerte Befestigungsschrauben zur Befestigung des Lamellenpaketes eingesetzt werden, die wechselseitig in die Durchgangsbohrungen des jeweils gegenüberliegenden Flansches hineinragen.

Als nachteilig wird zum Teil empfunden, dass der Wechsel des Lamellenpaketes im eingebauten Zustand der Lamellenkupplung durch die vorgenannten Sicherungsmöglichkeiten erschwert wird.

Aufgabe der vorliegenden Erfindung ist es daher, eine Lamellenkupplung bereitzustellen, die ein unkontrolliertes Lösen einer mit der Lamellenkupplung verbundenen Welle oder eines zwischen zwei Lamellenpaketen eingesetzten Zwischenstückes bei einem Bruch einer einzelnen Lamelle oder eines ganzen Lamellenpaketes sicher verhindert und einfach montierbar ist.

Diese Aufgabe ist erfindungsgemäß bei einer Lamellenkupplung der eingangs genannten Art dadurch gelöst, dass beidseitig des Lamellenpaketes Sicherungselemente vorgesehen sind, die jeweils zwischen einem Flansch und dem Lamellenpaket positioniert und an dem Flansch fixiert sind, wobei die Sicherungselemente in den Bereich der zentralen Öffnung des Lamellenpaketes ragen und miteinander unter Bildung einer die zentrale Öffnung durchgreifenden Sicherungseinrichtung in Eingriff kommen.

Der Erfindung liegt somit die Überlegung zugrunde, die durch das ringförmig ausgebildete Lamellenpaket baulich vorgegebene zentrale Öffnung zu nutzen, um ein radiales Ausbrechen der Wellen bzw. des Zwischenstückes zu verhindern.

Hierzu schlägt die Erfindung vor, an beiden Seiten des Lamellenpaketes Sicherungselemente vorzusehen, die die zentrale Öffnung des Lamellenpaketes durchgreifen. Im Bereich der zentralen Öffnung kommen die Sicherungselemente miteinander in Eingriff und verhindern, dass sich die Flansche bei einem Bruch einer einzelnen Lamelle oder eines ganzen Lamellenpaketes voneinander lösen. Somit wird beispielsweise die zwischen zwei Lamellenpaketen angeordnete Zwischenhülse beim einseitigen Bruch eines Lamellenpaketes vor einem radialen Auswandern durch die miteinander in Eingriff kommenden Sicherungselemente gesichert.

In bevorzugter Weise sind Befestigungsmittel, insbesondere Verbindungsschrauben vorgesehen, über welche das Lamellenpaket und die Sicherungselemente gemeinsam an dem jeweiligen Flansch fixiert sind. Die Befestigungsmittel können beispielsweise als Passschrauben oder als Konusverschraubung ausgebildet sein. Dies vereinfacht die Herstellung und Montage der Lamellenkupplung.

In weiterer Ausgestaltung der Erfindung ist vorgesehen, dass die Sicherungselemente sich über die zentrale Öffnung des Lamellenpakets erstrecken und insbesondere an diametral gegenüberliegenden Bereichen des jeweiligen Flansches befestigt sind. Dies ermöglicht eine besonders einfache Montage der Sicherungselemente.

Unter Weiterbildung der erfindungsgemäßen Lamellenkupplung weisen die Sicherungselemente einen im Bereich der zentralen Öffnung des Lamellenpakets positionierten Mittelbereich und mehrere radial von dem Mittelbereich abragende Haltearme aufweisen, wobei die Haltearme in Umfangsrichtung des zugeordneten Flansches insbesondere gleichmäßig versetzt zueinander angeordnet sind. Diese Ausgestaltung hält radial auf die Sicherungselemente wirkenden Kräften besonders gut stand. Beispielsweise ragen bei Sicherungselementen mit zwei Haltearmen diese an diametral gegenüberliegenden Seiten des Mittelbereichs ab, wobei bei Sicherungselementen mit drei, vier, fünf, sechs, etc. Haltearmen diese in Umfangsrichtung insbesondere gleichmäßig versetzt zueinander angeordnet sein können, über die die Sicherungselemente an dem anliegenden Flansch befestigt sind.

Zweckmäßigerweise besitzen die Sicherungselemente in dem Mittelbereich eine größere Materialdicke als im Bereich der Haltearme. Da im Bereich der Mittelbereiche der Sicherungselemente die größten Kräfte wirken, sind die Sicherungselemente durch die größere Materialdicke in diesem Bereich besonders stabil ausgelegt.

Weiterhin können die Sicherungselemente in ihrem Mittelbereich eine größere Breite besitzen als im Bereich ihrer Haltearme und insbesondere der Mittelbereich eine etwa kreisförmige Kontur. Auf den Mittelbereich der Sicherungselemente wirken die größten Kräfte, so dass dieser Bereich durch die größere Breite besonders stabil ausgelegt ist. Durch die kleinere Breite im Bereich der Haltearme können zwischen den Sicherungselementen und dem Lamellenpaket unter Beibehaltung der baulichen Höhe der Lamellenkupplung Zwischenscheiben eingesetzt werden.

In bevorzugter Weise weist ein Sicherungselement eine ringförmige Aussparung und ein weiteres Sicherungselement einen ringförmigen Vorsprung, der in die Aussparung unter Bildung der Sicherungseinrichtung eingreift, auf. Durch diese Ausgestaltung können die Sicherungselemente besonders einfach miteinander verbunden werden.

Um einen Winkelversatz zwischen den angeschlossenen Wellen auszugleichen, kann zwischen der Aussparung und dem Vorsprung ein Ringspalt ausgebildet sein.

Gemäß einer Weiterbildung der erfindungsgemäßen Lamellenkupplung ist vorgesehen, dass die Sicherungselemente in der Umfangsrichtung versetzt zueinander angeordnet sind. Diese Anordnung erhöht die Stabilität der Sicherung, da unabhängig von der Drehposition der Lamellenkupplung eine gute radiale Sicherung gewährleistet ist. Somit sind die Sicherungselemente derart zueinander angeordnet, dass die Haltearme des einen Halteelementes stets die zwischen zwei Haltearmen des anderen Halteelementes gebildete Lücke überdecken. Beispielsweise können die Sicherungselemente mit zwei Haltearmen um 90° versetzt zueinander angeordnet sein.

Vorzugsweise kann zwischen den miteinander verbundenen Sicherungselementen ein Dämpfungselement vorgesehen sein. Beispielweise kann das Dämpfungselement axial zwischen den Sicherungselementen angeordnet sein. Dadurch wird verhindert, dass bei einem Winkelversatz der mit der Lamellenkupplung gekoppelten Wellen zum einen die Stützelemente untereinander und zum anderen die Stützelemente mit den Lamellen in Kontakt kommen.

Hinsichtlich weiterer vorteilhafter Ausgestaltungen der Erfindung wird auf die Unteransprüche sowie auf die Beschreibung eines Ausführungsbeispiels unter Bezugnahme auf die beiliegende Zeichnung verwiesen. In der Zeichnung zeigt:
- Figur 1: eine als Doppellamellenkupplung ausgebildete Lamellenkupplung gemäß der vorliegenden Erfindung in einer Seitenquerschnittsansicht;
- Figur 2: Sicherungselemente der erfindungsgemäßen Doppellamellenkupplung aus Figur 1 in einer Draufsicht;
- Figur 3: die Sicherungselemente aus Figur 2 in einer Seitenquerschnittsansicht entlang der Linie III-III;
- Figur 4: ein Sicherungselement mit einer ringförmiger Aussparung aus Figur 2 in einer Draufsicht;
- Figur 5: das Sicherungselement aus Figur 4 in einer Seitenquerschnittsansicht entlang der Linie V-V;
- Figur 6: ein Sicherungselement mit einem ringförmigem Vorsprung aus Figur 2 in einer Draufsicht; und
- Figur 7: das Sicherungselement aus Figur 6 in einer Seitenquerschnittsansicht entlang der Linie VII-VII.

In der Zeichnung ist eine Lamellenkupplung 1 gemäß einer Ausführungsform der vorliegenden Erfindung dargestellt, die zur Übertragung eines Drehmoments von einer Abtriebswelle auf eine Antriebswelle dient. Die Lamellenkupplung 1 ist hier als Doppellamellenkupplung ausgebildet und umfasst in an sich bekannter Weise eine der Antriebswelle zugeordnete Antriebsnabenanordnung 2 und eine der Abtriebswelle zugeordnete Abtriebsnabenanordnung 3, wobei an den zueinander weisenden Enden der Nabenanordnungen 2, 3 Kupplungsflansche 4 ausgebildet sind. Zwischen den Kupplungsflanschen 4 ist eine Zwischenhülse 5 positioniert, die an ihren axialen Enden Verbindungsflansche 6 trägt, welche den Kupplungsflanschen 4 der Antriebsnabenanordnung 2 und der Abtriebsnabenanordnung 3 gegenüberliegen. Zwischen einander gegenüberliegenden Paaren von Kupplungsflanschen 4 und Verbindungsflanschen 6 ist jeweils ein Lamellenpaket 7 positioniert, das wechselseitig an den Flanschen 4, 6 befestigt ist. Die Lamellenpakete 7 umfassen jeweils eine Vielzahl von ringartigen Einzellamellen 8, die einen in etwa quadratischen Umriss aufweisen, so dass das Lamellenpaket 7 eine zentrale Öffnung 9 besitzt.

Erfindungsgemäß sind beidseitig der Lamellenpakete 7 Sicherungselemente 10, 11 vorgesehen. Konkret ist ein Sicherungselement 10 zwischen dem Kupplungsflansch 4 und dem Lamellenpaket 7 positioniert und an dem Kupplungsflansch 4 befestigt und ist ein weiteres Sicherungselement 11 zwischen dem Lamellenpaket 7 und dem Verbindungsflansch 6 positioniert und an dem Verbindungsflansch 6 befestigt. Die Sicherungselemente 10, 11 ragen in den Bereich der zentralen Öffnung 9 des jeweiligen Lamellenpaketes 7 und kommen dort miteinander unter Bildung die zentrale Öffnung 9 durchgreifende Sicherheitseinrichtung 12 in Eingriff.

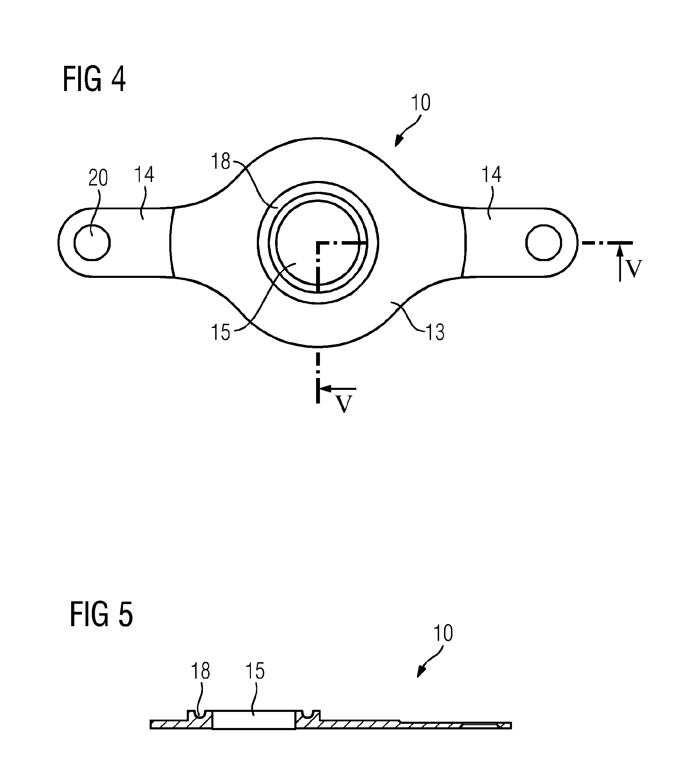

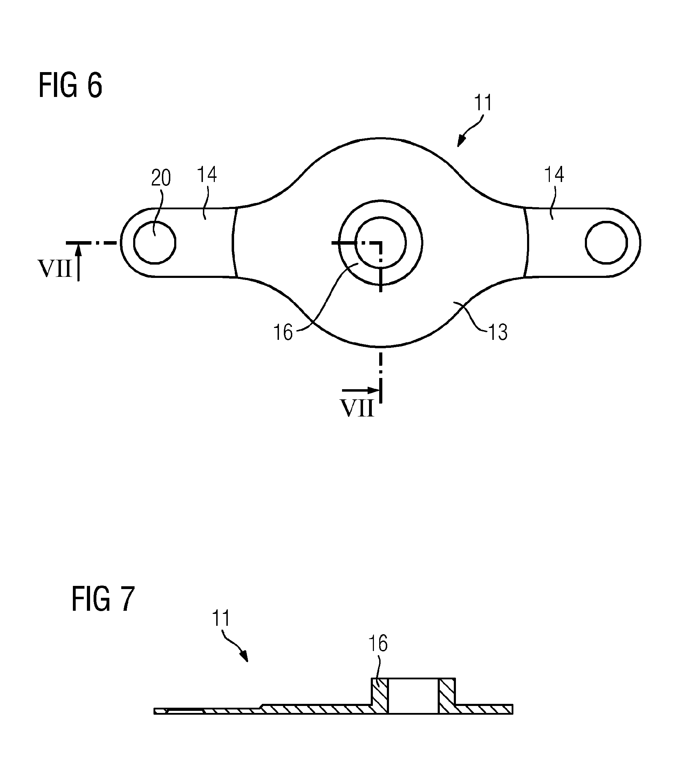

In den Figuren 4 bis 7 ist gut erkennbar, dass die Sicherungselemente 10, 11 im Wesentlichen länglich ausgebildet sind und in dem Bereich der zentralen Öffnung 9 des Lamellenpakets 7 einen Mittelbereich 13 mit einer etwa kreisförmigen Kontur aufweisen. An den diametral gegenüberliegenden Seiten des Mittelbereichs 13 sind zwei radial abragende Haltearme 14 ausgebildet, über die die Sicherungselemente 10, 11 an dem jeweils anliegenden Flansch 4, 6 fixiert sind. In dem Mittelbereich 13 besitzen die Sicherungselemente 10, 11 eine größere Materialdicke und eine größere Breite als im Bereich der Haltearme 14. Sie erstrecken sich über die zentrale Öffnung 9 des jeweiligen Lamellenpaketes 7 und sind um 90° versetzt zueinander angeordnet.

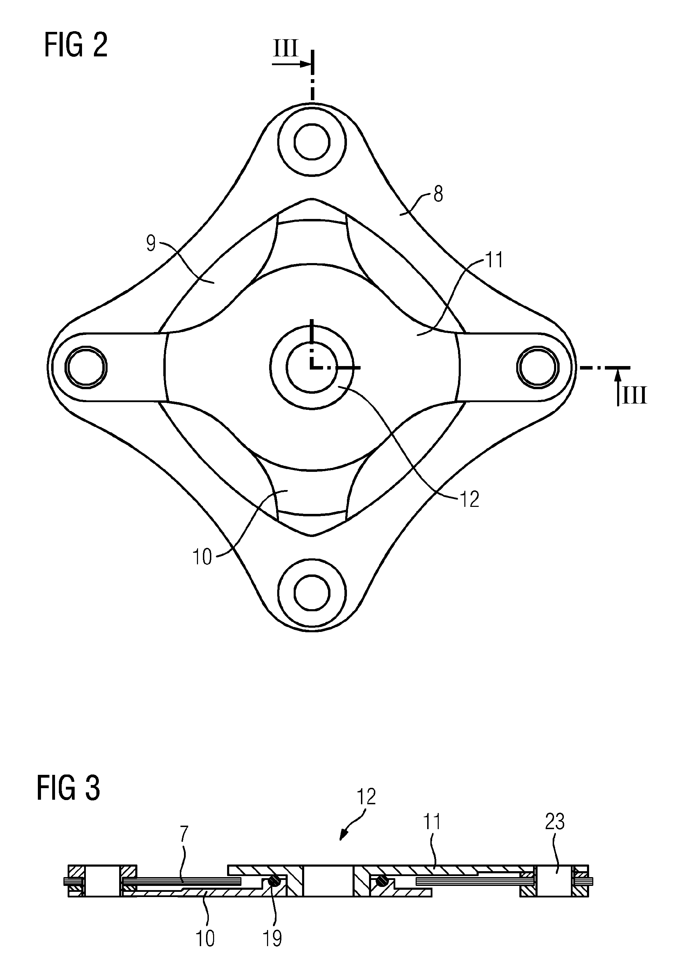

Die an den Kupplungsflanschen 4 angebrachten Sicherungselemente 10 weisen in ihrem Mittelbereich 13 jeweils zentrisch angeordnet eine ringförmige Aussparung 15 auf, und die an den Verbindungsflanschen 6 befestigten Sicherungselemente 11 weisen in ihrem Mittelbereich 13 jeweils zentrisch angeordnet einen ringförmigen Vorsprung 16 auf, der gemäß Figur 2 unter Bildung der Sicherheitseinrichtung 12 in die Aussparung 15 der an den Kupplungsflanschen 4 befestigten Sicherungselemente 10 eingreift. Zwischen der Aussparung 15 und dem Vorsprung 16 der miteinander in Eingriff kommenden Sicherungselemente 10, 11 ist ein Ringspalt 17 ausgebildet. Des Weiteren ist axial zwischen den Sicherungselementen 10, 11 ein Dämpfungselement 19 vorgesehen, das einen Kontakt der Sicherungselemente 10, 11 verhindern oder zumindest abfedern soll.

Konkret ist an den Sicherungselementen 10, welche an den Kupplungsflanschen 4 befestigt sind, jeweils eine konzentrisch zur Aussparung 15 angeordnete ringförmige Nut 18 ausgebildet, in die ein Dämpfungsring 19 eingelegt ist.

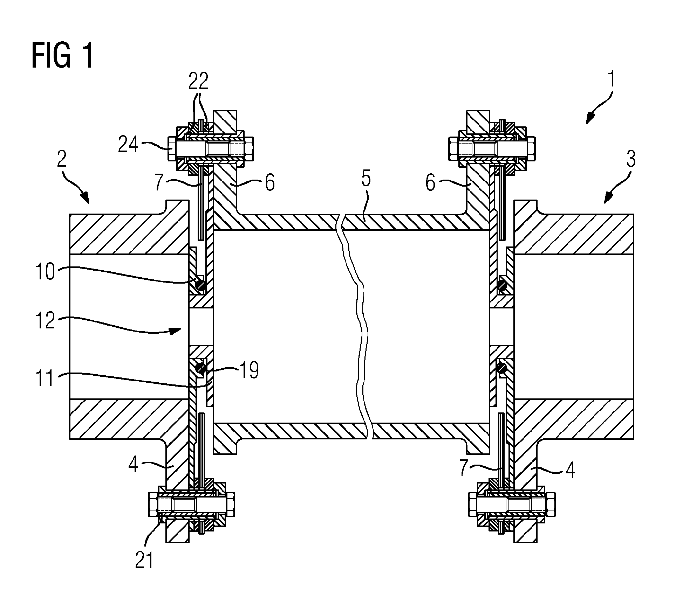

In der Figur 1 ist gut erkennbar, dass durch die vorgenannte Anordnung die Sicherungselemente 10, 11 zusammen mit den Lamellenpaketen 7 im Wechsel mit dem jeweiligen Kupplungsflansch 4 und dem jeweiligen Verbindungsflansch 6 befestigt sind. Die Einzellamellen 8 weisen hierzu in ihrer Umfangsrichtung gleichmäßig verteilt vier Bohrungen 20 auf, welche von Buchsen 21 durchgriffen werden. Die beidseitig an dem jeweiligen Lamellenpaket 7 angeordneten Sicherungselemente 10, 11 sind ebenfalls auf die Buchsen 21 gereiht, wobei zwischen den Sicherungselementen 10, 11 und dem Lamellenpaket 7 jeweils Maßscheiben 22 positioniert sind, um einen metallischen Kontakt zwischen dem Lamellenpaket 7 und dem jeweiligen Sicherungselement 10, 11 zu vermeiden. Durch die Bohrungen 23 der Buchsen 21 greifen Verbindungsschrauben 24, welche die Sicherungselemente 10, 11 und das Lamellenpaket 7 jeweils wechselseitig mit dem Kupplungsflansch 4 und dem gegenüberliegenden Verbindungsflansch 6 verspannen.

Bei einem Bruch einer Einzellamelle 8 oder eines ganzen Lamellenpaketes 7 im Betrieb der Doppellamellenkupplung 1 ist der Verbindungsflansch 6 der Zwischenhülse 5 zumindest einseitig nicht mehr mit dem jeweiligen Kupplungsflansch 4 über das Lamellenpaket 7 verbunden. In diesem Zustand wird die Zwischenhülse 5 gegen ein unkontrolliertes Lösen über die Sicherungselemente 10, 11 gesichert.

In analoger Weise zu der Doppellamellenkupplung 1 können die Sicherungselemente 10, 11 auch bei einer Lamellenkupplung mit nur einem Lamellenpaket 7 eingesetzt werden. Wenn eine Einzellamelle 8 oder ein ganzes Lamellenpaket 7 im Betrieb der Lamellenkupplung bricht, sind die beiden Kupplungsflansche 4 der Lamellenkupplung in analoger Weise gegen ein unkontrolliertes Lösen über die Sicherungselemente 10, 11 gesichert.

## Patentansprüche

1. Lamellenkupplung (1) mit einem einer Antriebswelle zugeordneten Flansch (4, 6) und einem einer Abtriebswelle zugeordneten Flansch (4, 6), wobei die Flansche über ein Lamellenpaket (7) miteinander verbunden sind, das eine zentrale Öffnung (9) aufweist und zwischen den Flanschen (4, 6) positioniert und wechselseitig an diesen lösbar befestigt ist, **dadurch gekennzeichnet, dass** beidseitig des Lamellenpaketes (7) Sicherungselemente (10, 11) vorgesehen sind, die jeweils zwischen einem Flansch (4, 6) und dem Lamellenpaket (7) positioniert und an dem Flansch (4, 6) fixiert sind, wobei die Sicherungselemente (10, 11) in den Bereich der zentralen Öffnung (9) des Lamellenpaketes (7) ragen und miteinander unter Bildung einer die zentrale Öffnung (9) durchgreifenden Sicherungseinrichtung (12) in Eingriff kommen.

2. Lamellenkupplung (1) nach Anspruch 1,
**dadurch gekennzeichnet, dass**
Befestigungsmittel, insbesondere Verbindungsschrauben (24) vorgesehen sind, über welche das Lamellenpaket (7) und die Sicherungselemente (10, 11) gemeinsam an dem jeweiligen Flansch (4, 6) fixiert sind.

3. Lamellenkupplung (1) nach Anspruch 1 oder 2,
**dadurch gekennzeichnet, dass**
die Sicherungselemente (10, 11) sich über die zentrale Öffnung (9) des Lamellenpakets (7) erstrecken und insbesondere an diametral gegenüberliegenden Bereichen des jeweiligen Flansches (4, 6) befestigt sind.

4. Lamellenkupplung (1) nach Anspruch 3,
**dadurch gekennzeichnet, dass**
die Sicherungselemente (10, 11) einen im Bereich der zentralen Öffnung (9) des Lamellenpakets (7) positionierten Mittelbereich (13) und mehrere radial von dem Mittelbereich (13) abragende Haltearme (14) aufweisen, wobei die Haltearme (14) in Umfangsrichtung des zugeordneten Flansches (4, 6) insbesondere gleichmäßig versetzt zueinander angeordnet sind.

5. Lamellenkupplung (1) nach Anspruch 4,
**dadurch gekennzeichnet, dass**
die Sicherungselemente (10, 11) in dem Mittelbereich (13) eine größere Materialdicke besitzen als im Bereich der Haltearme (14).

6. Lamellenkupplung (1) nach Anspruch 4 oder 5,
**dadurch gekennzeichnet, dass**
die Sicherungselemente (10, 11) in ihrem Mittelbereich (13) eine größere Breite besitzen als im Bereich ihrer Haltearme (14) und insbesondere der Mittelbereich (13) eine etwa kreisförmige Kontur besitzt.

7. Lamellenkupplung (1) nach einem der vorhergehenden Ansprüche,
**dadurch gekennzeichnet, dass**
ein Sicherungselement (10, 11) eine ringförmige Aussparung (15) und ein weiteres Sicherungselement (10) einen ringförmigen Vorsprung (16), der in die Aussparung (15) unter Bildung der Sicherungseinrichtung (12) eingreift, aufweist.

8. Lamellenkupplung (1) nach Anspruch 7,
**dadurch gekennzeichnet, dass**
zwischen der Aussparung (15) und dem Vorsprung (16) ein Ringspalt (17) ausgebildet ist.

9. Lamellenkupplung (1) nach einem der vorherigen Ansprüche,
**dadurch gekennzeichnet, dass**
die Sicherungselemente (10, 11) in der Umfangsrichtung versetzt zueinander angeordnet sind.

10. Lamellenkupplung (1) nach einem der vorherigen Ansprüche,
**dadurch gekennzeichnet, dass**
zwischen den miteinander verbundenen Sicherungselementen (10, 11) ein Dämpfungselement (19) vorgesehen ist.

11. Lamellenkupplung (1) nach Anspruch 10,
**dadurch gekennzeichnet, dass**
das Dämpfungselement (19) axial zwischen den Sicherungselementen (10, 11) angeordnet ist.
